# EUROPÄISCHE PATENTANMELDUNG

(11) **EP 4 474 319 A1**
(43) Veröffentlichungstag der Anmeldung: **11.12.2024**
(21) Anmeldenummer: 24174575.1
(22) Anmeldetag: 07.05.2024
(51) Int. Cl.: B65G 59/00

(54) **DEPALETTIERSTATION FÜR UMVERPACKUNGEN UND VERPACKUNGSSYSTEM**

(30) Priorität: 05.06.2023 DE 102023114672
(71) Anmelder: Krones Aktiengesellschaft, 93073 Neutraubling (DE)
(72) Erfinder: KIRZINGER, Johannes, 93073 Neutraubling (DE); WINZINGER, Frank, 93073 Neutraubling (DE)
(74) Vertreter: Benninger, Johannes

(57) **Zusammenfassung**

Es ist eine Depalettierstation (1) für Umverpackungen offenbart. Die Depalettierstation (1) bildet einen physisch abgegrenzten Gefahrenbereich (6) aus und umfasst mindestens einen im physisch abgegrenzten Gefahrenbereich (6) angeordneten Manipulator (15) sowie wenigstens eine in den physisch abgegrenzten Gefahrenbereich (6) abschnittsweise hineinreichende Horizontalfördereinrichtung (20).

Es ist vorgesehen, dass der mindestens eine Manipulator (15) zu Abnahme von Umverpackungen von einer Palette (5) sowie zur Positionierung der von der Palette (5) abgenommenen Umverpackungen auf einem in den Gefahrenbereich (6) hineinreichenden Abschnitt (26) der wenigstens einen Horizontalfördereinrichtung (20) ausgebildet ist. Weiter ist vorgesehen, dass der Gefahrenbereich (6) derart physisch abgegrenzt ist, dass im Gefahrenbereich (6) mindestens zwei Paletten (5) mit hierauf gestapelt angeordneten Umverpackungen gemeinsam positionierbar sind.

## Beschreibung

Die vorliegende Erfindung betrifft eine Depalettierstation für Umverpackungen und ein Verpackungssystem mit einer solchen Depalettierstation.

Für die Verarbeitung, Zusammenstellung, Gruppierung und Verpackung von Artikeln wie bspw. Getränkebehältern gibt es die unterschiedlichsten Verpackungsarten. Derzeit bspw. als Getränkebehälter eingesetzte PET-Behälter weisen relativ geringe Wandstärken auf und sind auch im befüllten Zustand nicht völlig formstabil. Aus diesem Grund und im Hinblick auf die bessere logistische Handhabbarkeit werden die verschiedensten Verpackungen für gruppierte Einzelbehälter eingesetzt. So können die Behälter in gruppierter Anordnung bspw. auf einen Kartonbogen gestellt werden, dessen Ränder nach oben gefalzt werden. Dies bezeichnet man auch als Tray. Auch sind Ausführungsformen bekannt, bei welchen Behälter in gruppierter Anordnung bspw. auf einen Kartonbogen gestellt werden, der eine ebene Standfläche für die jeweiligen Behälter ausbildet und keine Ränder besitzt, die nach oben gefaltet werden müssen bzw. können. Diese Kartonbögen bzw. Verpackungen werden als Pad bezeichnet.

Auch sind Verpackungen bekannt, bei denen es sich um Kartonagen handelt und welche allumseitig geschlossen werden können, um mehrere Artikel für einen Transport aufzunehmen. Um eine jeweilige solche Verpackung, die als Umverpackung bezeichnet wird, möglichst schnell an den jeweiligen Behältern anordnen zu können, sind bereits Vorrichtungen bekannt, bei welchen die jeweiligen Behälter auf eine Verpackung bzw. auf ein Pad oder Tray auffahren können oder bei welchen eine solche Verpackung auf andere Art und Weise mit den jeweiligen Artikeln zusammengebracht werden kann.

Eine derartige Vorrichtung offenbart beispielsweise die DE 10 2014 112 341 A1. Die hier offenbarte Verpackungsvorrichtung besitzt eine Horizontalfördereinrichtung, auf welcher Gruppen aus Behältern gebildet werden. Weiter umfasst die Verpackungsvorrichtung eine Kartonzufuhr, welche Kartonumverpackungen bereitstellt. Über die Kartonzufuhr werden Kartonumverpackungen bereitgestellt, so dass eine jeweilige Gruppe an Behältern auf eine jeweilige Kartonumverpackung auffahren kann und nachfolgend auf der jeweiligen Kartonumverpackung aufsteht.

Eine Vielzahl an Kartonumverpackungen, welche einer solchen Vorrichtung bereitgestellt werden, sind in der Praxis zunächst in gestapelter Form auf einer jeweiligen Palette angeordnet, können über einen Depalettierer von der Palette abgenommen werden und sodann über eine Horizontalfördereinrichtung zur Verpackungsvorrichtung transportiert werden, wo sie in der beschriebenen Art und Weise zur Verpackung von Artikeln verwendet werden. Wenn sämtliche Umverpackungen mittels eines Depalettierers von einer jeweiligen Palette abgenommen sind, wird die jeweilige Palette aus dem Depalettierer entnommen und durch eine neue Palette mit einem weiteren Stapel an Umverpackungen ersetzt. Dies erfolgt in der Praxis manuell und ist mit einem entsprechenden Zeitaufwand verbunden, innerhalb dessen keine Umverpackungen von einer Palette abgenommen werden können. Um eine ausreichende Versorgung der Verpackungsvorrichtung mit Umverpackungen gewährleisten zu können, besitzen Verpackungsvorrichtungen bis dato Puffersysteme, die einen größeren Platzbedarf benötigen, welcher häufig nicht zur Verfügung steht.

Eine Aufgabe der Erfindung ist es daher eine Möglichkeit bereitzustellen, mit der auch bei geringeren Platzverhältnissen eine durchgehende Versorgung einer Verpackungsvorrichtung mit einer zur Verpackung von Artikelgruppen notwendigen Anzahl an Umverpackungen gewährleistet werden kann.

Diese Aufgabe der Erfindung wird mit den Gegenständen gelöst, welche die Merkmale in den unabhängigen Ansprüchen umfassen.

Die Erfindung betrifft eine Depalettierstation für Umverpackungen. Bei den Umverpackungen kann es sich hierbei um gefaltete Kartonagen handeln. Auch kann es sich bei den Umverpackungen beispielsweise um gefaltete Zuschnitte aus Verpackungsmaterial handeln, die zum Überführen in eine aufrechte Orientierung vorgesehene Laschen besitzen und als Tray bezeichnet werden.

Auch können Umverpackungen durch flächige Verpackungszuschnitte ohne Laschen ausgebildet sein, die eine plane Aufstandsfläche für jeweils mehrere Artikel ausbilden.

Ein weiteres Beispiel für derartige Umverpackungen stellen sog. Wrap-around-Kartons dar. Solche Karton-Umverpackungen können entweder ungefaltet verarbeitet oder vorgefaltet zur Verfügung gestellt werden.

Die Depalettierstation bildet einen physisch abgegrenzten Gefahrenbereich aus und umfasst mindestens einen im physisch abgegrenzten Gefahrenbereich angeordneten Manipulator. Hierbei kann es beispielsweise sein, dass die Depalettierstation mehrere Wände besitzt, welche den Gefahrenbereich physisch abgrenzen und einen Sicherheitsraum definieren.

Hierbei kann es in diversen Ausführungsformen sein, dass der Sicherheitsraum über einen Zugang verfügt, welcher Zugang lediglich unter vorbestimmten Bedingungen geöffnet werden kann. Bei dem Zugang kann es sich beispielsweise um eine Sicherheitstüre handeln, mit welcher eine der vorherig erwähnten Wände der Depalettierstation ausgestattet ist, welche Wände den Gefahrenbereich physisch abgrenzen und den Sicherheitsraum definieren.

Bewährt haben sich Ausführungsformen, bei denen die Depalettierstation genau einen im physisch abgegrenzten Gefahrenbereich angeordneten Manipulator umfasst. Jedoch ist auch vorstellbar, dass die Depalettierstation mehr als einen Manipulator und beispielsweise genau zwei Manipulatoren oder genau drei Manipulatoren umfasst, die im physisch abgegrenzten Gefahrenbereich angeordnet sind.

Weiter umfasst die Depalettierstation wenigstens eine in den physisch abgegrenzten Gefahrenbereich abschnittsweise hineinreichende Horizontalfördereinrichtung. Es kann hierbei sein, dass eine der vorhergehend bereits erwähnten Wände der Depalettierstation, welche den Gefahrenbereich physisch abgrenzen und einen Sicherheitsraum definieren, eine Öffnung umfasst, durch welche die wenigstens eine Horizontalfördereinrichtung in den physisch abgegrenzten Gefahrenbereich bzw. in den Sicherheitsraum eintritt.

Ein Abschnitt der wenigstens einen Horizontalfördereinrichtung kann sich somit innerhalb des physisch abgegrenzten Gefahrenbereichs bzw. innerhalb des Sicherheitsraumes befinden, wohingegen ein weiterer Abschnitt der wenigstens einen Horizontalfördereinrichtung außerhalb des Gefahrenbereichs bzw. außerhalb des Sicherheitsraumes positioniert ist.

Es ist vorgesehen, dass der mindestens eine Manipulator bzw. der genau eine Manipulator oder die genau zwei oder genau drei Manipulatoren zur Abnahme von Umverpackungen von einer Palette sowie zur Positionierung der von der Palette abgenommenen Umverpackungen auf einem in den Gefahrenbereich bzw. in den Sicherheitsraum hineinreichenden Abschnitt der wenigstens einen Horizontalfördereinrichtung ausgebildet ist.

Die Depalettierstation kann eine Steuereinrichtung umfassen, mit welcher der mindestens eine Manipulator in Verbindung steht und über welche Steuereinrichtung der mindestens eine Manipulator bzw. der genau eine Manipulator oder die genau zwei oder genau drei Manipulatoren zur Abnahme von Umverpackungen von einer Palette sowie zur Positionierung der von der Palette abgenommenen Umverpackungen auf dem in den Gefahrenbereich bzw. in den Sicherheitsraum hineinreichenden Abschnitt der wenigstens einen Horizontalfördereinrichtung ansteuerbar sind.

Der Gefahrenbereich ist bei der Depalettierstation derart physisch abgegrenzt, dass im Gefahrenbereich mindestens zwei Paletten mit hierauf gestapelt angeordneten Umverpackungen gemeinsam positionierbar sind. Somit kann es sein, dass die mehreren vorherig bereits erwähnten Wände einen solchen Sicherheitsraum definieren, dass im Sicherheitsraum mindestens zwei Paletten mit hierauf gestapelt angeordneten Umverpackungen gemeinsam positionierbar sind.

Wenn im Rahmen der vorliegenden Patentanmeldung von einer Palette die Rede ist, so kann es sich hierbei um eine Europalette mit den Maßen von vorzugsweise etwa 1200 mm in der Länge, etwa 800 mm in der Breite und etwa 144 mm in der Höhe handeln. Alternativ hierzu kann unter dem Begriff einer Palette eine Industriepalette mit den Maßen von vorzugsweise 1000 mm in der Länge, 1200 mm in der Breite und 144 mm in der Höhe verstanden werden.

Der im vorliegenden Zusammenhang verwendete Begriff der Palette ist jedoch umfassend und breit zu sehen und soll daher sämtliche Träger für Stapel an Umverpackungen umfassen. Werden lediglich Umverpackungsstapel ohne zugehörigen Träger transportiert, d.h. ohne zu den Umverpackungen hinzukommenden Träger, so kann die unterste Umverpackung als Palette betrachtet werden. In einem solchen Fall muss diese unterste Umverpackung nicht abtransportiert werden, so dass auf einen Abförderer für (Holz-)Paletten verzichtet werden kann.

Indem mindestens zwei Paletten mit hierauf gestapelt angeordneten Umverpackungen im Gefahrenbereich gemeinsam positionierbar sind, kann schnell und auf unkomplizierte Weise auf eine der beiden Paletten gewechselt und von dieser Palette Umverpackungen abgenommen werden, wenn der Vorrat an Umverpackungen einer Palette erschöpft ist. Es ist nicht notwendig zunächst die jeweilige leere Palette aus dem Gefahrenbereich zu entnehmen und durch eine neue Palette mit hierauf gestapelt angeordneten Umverpackungen zu ersetzen. Somit kann gewährleistet werden, dass eine Verpackungsvorrichtung immer ausreichend mit Umverpackungen versorgt werden kann, auch wenn der Vorrat an Umverpackungen einer Palette zu einem bestimmten Zeitpunkt erschöpft sein sollte.

Auf Pufferstrecken, welche in der Regel einen umfangreichen Platzbedarf erfordern, kann entweder vollständig verzichtet werden oder es können solche Pufferstrecken mit verkleinerter Dimensionierung ausgestaltet werden.

Ein weiterer Vorteil liegt darin, dass bei einem Formatwechsel von einem Umverpackungsformat auf ein anderes Format weniger (jetzt nicht mehr benötigte) Umverpackungen zurück auf die Paletten gelegt werden müssen, sofern die aufgrund des begonnenen und dann unterbrochenen Förderprozesses notwendig ist.

Vorzugsweise ist der Manipulator bzw. seine Steuerung derart ausgebildet, dass mit dem Manipulator unterschiedliche Umverpackungsformate erfasst, ergriffen bzw. transportiert werden können. Auf diese Weise ist eine schnelle Umstellung gewährleistet, so dass z.B. unmittelbar nach dem Greifen von Umverpackungen eines Formats Umverpackungen eines anderen Formats gegriffen werden können.

Ein weiterer Vorteil kann dann darin bestehen, dass weniger oder keine Pufferstrecke berücksichtigt oder bereitgehalten werden muss, wenn auf ein anderes Format umgestellt werden muss.

Es ist außerdem denkbar, dass zwei sortenreine Paletten unterschiedlichen Formats gleichzeitig im Gefahrenbereich angeordnet sind.

In diversen Ausführungsformen kann es sein, dass der mindestens eine Manipulator derart konfiguriert und ausgestattet ist, dass mittels des mindestens einen Manipulators sämtliche Umverpackungen von einer der mindestens zwei im Gefahrenbereich positionierten Paletten abnehmbar sind und mittels des mindestens einen Manipulators ohne Unterbrechung hierauf folgend sämtliche Umverpackungen von einer weiteren Palette der mindestens zwei im Gefahrenbereich positionierten Paletten abnehmbar sind.

Es kann sein, dass die Depalettierstation mindestens eine Sensorik und eine Steuereinrichtung umfasst, wobei der mindestens eine Manipulator und die mindestens eine Sensorik mit der Steuereinrichtung in Verbindung stehen. Die Steuereinrichtung kann derart ausgebildet sein, dass sie über die mindestens eine Sensorik erkennen kann, wenn ein Vorrat an Umverpackungen einer jeweiligen Palette erschöpft ist. Weiter kann die Steuereinrichtung derart ausgebildet sein, dass sie den mindestens einen Manipulator automatisch zu einer Abnahme von Umverpackungen von einer Palette mit hierauf noch gestapelt angeordneten Umverpackungen ansteuert, wenn sie mittels der mindestens einen Sensorik erkennt, dass ein Vorrat an Umverpackungen einer Palette erschöpft ist, von welcher der mindestens eine Manipulator bis dahin Umverpackungen abgenommen hat.

Bei dem mindestens einen Manipulator kann es sich um mindestens ein Portalsystem handeln, das mindestens einen zum Erfassen jeweils mehrerer Umverpackungen ausgebildeten Greiferkopf besitzt, welcher zwischen den mindestens zwei im Gefahrenbereich positionierten Paletten hin und her beweglich ausgebildet ist. Der Greiferkopf kann zur klemmenden Entgegennahme jeweils mehrerer Umverpackungen ausgebildet sein. Alternativ oder ergänzend hierzu kann der mindestens eine Greiferkopf in Richtung der mindestens zwei im Gefahrenbereich positionierten Paletten heb- und senkbar ausgebildet sein.

Wenn im vorliegenden Zusammenhang von einem Manipulator gesprochen wird, so ist in der Regel ein Roboter gemeint, wahlweise auch nur der greifende und bewegliche Abschnitt eines Roboters. Ein solcher Roboter kann bspw. ein Gelenkarm-Roboter mit mehrachsig zueinander beweglichen Gelenkarmen sein. Auch kann der Roboter bspw. ein Portalroboter mit in drei Richtungen beweglich aufgehängtem Manipulator oder auch ein Parallelkinematik-Roboter sein.

Weiter kann die Depalettierstation mindestens eine weitere Horizontalfördereinrichtung umfassen, die sich durch den Gefahrenbereich erstreckt und einen ersten Abschnitt, einen zweiten Abschnitt und einen dritten Abschnitt ausbildet, wobei der zweite Abschnitt in einer Transportrichtung der mindestens einen weiteren Horizontalfördereinrichtung an den ersten Abschnitt anschließt und wobei der dritte Abschnitt in Transportrichtung der mindestens einen Horizontalfördereinrichtung an den zweiten Abschnitt anschließt.

Eine Transportrichtung der mindestens einen weiteren Horizontalfördereinrichtung und eine Transportrichtung der wenigstens einen vorherig bereits erwähnten in den physisch abgegrenzten Gefahrenbereich abschnittsweise hineinreichenden Horizontalfördereinrichtung können senkrecht zueinander verlaufen.

Bei der mindestens einen weiteren Horizontalfördereinrichtung kann es sein, dass sich der erste Abschnitt außerhalb des physisch abgegrenzten Gefahrenbereichs bzw. außerhalb des Sicherheitsraums befindet und eine Aufnahmekapazität für mindestens eine Palette mit hierauf gestapelt angeordneten Umverpackungen besitzt. Weiter kann es sein, dass sich der zweite Abschnitt im Gefahrenbereich bzw. im Sicherheitsraum befindet und eine Aufnahmekapazität für mindestens zwei Paletten mit hierauf gestapelt angeordneten Umverpackungen besitzt. Zudem kann es sein, dass sich der dritte Abschnitt außerhalb des Gefahrenbereichs befindet und zum Abführen einer leeren Palette aus dem Gefahrenbereich ausgebildet ist, von welcher Palette bzw. leeren Palette mittels des mindestens einen Manipulators sämtliche Umverpackungen abgenommen worden sind.

Weiter haben sich Ausführungsformen bewährt, bei denen die wenigstens eine weitere Horizontalfördereinrichtung im Bereich des ersten Abschnittes, im Bereich des zweiten Abschnittes und/oder im Bereich des dritten Abschnittes als Rollenförderer ausgebildet ist. Auch kann es beispielsweise sein, dass die wenigstens eine weitere Horizontalfördereinrichtung im Bereich des ersten Abschnittes, im Bereich des zweiten Abschnittes und/oder im Bereich des dritten Abschnittes ein umlaufend angetriebenes Transportband umfasst.

Auch haben sich Ausführungsformen bewährt, bei denen die mindestens eine weitere Horizontalfördereinrichtung zum Drehen einer Palette um eine vertikal orientierte Achse mit einem Drehwinkel ausgebildet ist, welcher 90° oder ein Mehrfaches von 90° beträgt. Sofern die mindestens eine weitere Horizontalfördereinrichtung einen ersten Abschnitt, einen zweiten Abschnitt und einen dritten Abschnitt gemäß der vorherig beschriebenen Ausführungsform umfasst, kann es sein, dass die mindestens eine weitere Horizontalfördereinrichtung im Bereich des ersten Abschnittes zum Drehen einer Palette um eine vertikal orientierte Achse mit einem Drehwinkel ausgebildet ist, welcher 90° oder ein Mehrfaches von 90° beträgt.

Weiter kann die Depalettierstation mindestens ein fahrerloses Transportfahrzeug umfassen, welches zum Verbringen einer Palette mit hierauf gestapelt angeordneten Umverpackungen an den ersten Abschnitt der mindestens einen weiteren Horizontalfördereinrichtung ausgebildet ist. Bei solchen Ausführungsformen kann die Depalettierstation mindestens eine Rampe umfassen, welche das mindestens eine fahrerlose Transportfahrzeug zur Übergabe einer Palette mit hierauf gestapelt angeordneten Umverpackungen an den ersten Abschnitt der mindestens einen weiteren Horizontalfördereinrichtung anfahren kann.

Die Depalettierstation kann in diversen Ausführungsformen mindestens ein fahrerloses Transportfahrzeug zum Transport einer Palette mit hierauf gestapelt angeordneten Umverpackungen umfassen, wobei der physisch abgegrenzte Gefahrenbereich bzw. der Sicherheitsraum über einen Zugang verfügt. Weiter können hierbei eine Steuereinrichtung sowie wenigstens eine Sensorik vorgesehen sein, über welche wenigstens eine Sensorik das mindestens eine fahrerlose Transportfahrzeug von der Steuereinrichtung identifizierbar ist, wobei die Steuereinrichtung zum Öffnen des Zugangs für das mindestens eine fahrerlose Transportfahrzeug als Reaktion auf eine Identifizierung des mindestens einen fahrerlosen Transportfahrzeuges über die wenigstens eine Sensorik ausgebildet ist.

Eine Identifizierung des fahrerlosen Transportfahrzeuges und ein Öffnen des Zuganges können insbesondere gemäß der Offenbarung der EP 3 467 601 A2 erfolgen, deren Offenbarungsinhalt in die vorliegende Anmeldung mit aufgenommen wird, so dass für die in EP 3 467 601 A2 offenbarten Merkmale Schutz begehrt werden kann. Dies gilt sowohl für die Ausführungsformen der vorhergehend beschriebenen Depalettierstation als auch für die Ausführungsformen des nachfolgend beschriebenen Verpackungssystems.

Die Erfindung betrifft zudem ein Verpackungssystem, das eine Depalettierstation gemäß einem Ausführungsbeispiel der vorhergehenden Beschreibung umfasst. Das Verpackungssystem umfasst zudem eine Verpackungsvorrichtung zum Verpacken jeweils mehrerer Artikel mit einer jeweiligen Umverpackung, wobei der Verpackungsvorrichtung Umverpackungen über die wenigstens eine Horizontalfördereinrichtung der Depalettierstation bereitstellbar sind.

Die Verpackungsvorrichtung kann eine Zuführeinrichtung umfassen, über die Umverpackungen in einen Transportweg der Artikel einbringbar sind, so dass jeweils mehrere Artikel auf eine jeweilige Umverpackung auffahren.

Das Verpackungssystem kann weiterhin eine Abfüllvorrichtung für zu verpackende Behälter umfassen.

Zudem kann das Verpackungssystem einen Palettierer für die von der Verpackungsvorrichtung hergestellten und bereitgestellten Packs bzw. Verpackungseinheiten umfassen.

Auch betrifft die Erfindung ein System zum Bereitstellen von Umverpackungen, welches mindestens eine Horizontalfördereinrichtung und wenigstens ein fahrerloses Transportfahrzeug umfasst. Das wenigstens eine fahrerlose Transportfahrzeug ist zur Aufnahme mindestens eines Stapels an Umverpackungen ausgebildet. Bestandteil des Systems ist zudem eine Rampe, welche derart ausgebildet ist, dass das wenigstens eine fahrerlose Transportfahrzeug über die Rampe ein definiertes Höhenniveau anfahren kann, welches definierte Höhenniveau auf die Übergabe eines aufgenommenen Stapels an Umverpackungen an die mindestens eine Horizontalfördereinrichtung abgestimmt ist.

Das wenigstens eine fahrerlose Transportfahrzeug kann einen Schieber umfassen, welcher zur Übergabe eines aufgenommenen Stapels an Umverpackungen an die wenigstens eine Horizontalfördereinrichtung bewegbar ist. Alternativ oder ergänzend hierzu kann das wenigstens eine fahrerlose Transportfahrzeug eine Klappe umfassen, welche eine Standfläche für einen jeweiligen Stapel an Umverpackungen ausbildet und um eine horizontal orientierte Achse schwenkbar ist.

Auch betrifft die Erfindung ein Verfahren zum Umgang mit Umverpackungen, bei dem Umverpackungen mittels eines Manipulators ergriffen, von einer Palette entnommen und an eine Zuführungsvorrichtung einer Verpackungsvorrichtung übergeben werden, wobei im Fall eines Formatwechsels zumindest eine an die Zuführvorrichtung übergebene Umverpackung nochmals ergriffen und auf die Palette abgelegt wird.

Bei der Übergabe an die Zuführungsvorrichtung lässt der Manipulator die Umverpackungen vorzugsweise los.

Der Begriff des Übergebens meint normalerweise ein Ablegen auf die bzw. auf der Zuführungsvorrichtung.

Vorzugsweise sind Sensoren zum Erfassen der Anzahl von zu verpackenden Behältern vorgesehen. Mittels der Anzahl der erfassten Behälter kann eine Steuerung berechnen, wieviel Umverpackungen noch benötigt werden und den solchermaßen ermittelten Überschuss auf der Zuführungsvorrichtung berechnen.

Vorzugsweise kann die Zuführungsvorrichtung die Umverpackungen zurück zum Manipulator transportieren. In anderen Worten kann sie in zwei Richtungen betrieben werden.

Insbesondere kann der Manipulator Umverpackungen zurück auf Paletten oder noch auf Paletten vorhandene Stapel überführen.

Bei der Depalettierstation kann es sich auch um eine Palettierstation handeln.

Insbesondere ist/sind die Horizontalfördereinrichtung und/oder der Manipulator jeweils in einer Weise beschaffen, dass der Manipulator die Umverpackungen von der Horizontalfördereinrichtung abgreifen kann.

Um dies zu ermöglichen, kann die Horizontalfördereinrichtung beispielsweise eine Lücke oder mehrere Lücken aufweisen, zwischen denen der Manipulator einen Greiferfinger hindurchfahren kann, um Umverpackungen von unten greifen zu können.

Die Horizontalfördereinrichtung kann bspw. einen Rollenförderer mit drehbaren, aber stationär angeordneten Rollen umfassen, zwischen welche der Manipulator eingreifen kann. Alternativ könnte die Horizontalfördereinrichtung die Umverpackungen bis an ihr Ende befördern, an dem ein Bereich der Umverpackungen übersteht.

Das Rückführen der Umverpackungen auf die Paletten erfolgt insbesondere bei Formatwechseln, also z.B. zumindest zeitweise zwischen zwei Produktionsphasen, in denen Behälter in Umverpackungen unterschiedlicher Abmessungen oder unterschiedlicher Art verpackt werden.

Bei der Rückführung und Palettierung von bereits depalettierten Umverpackungen kann es sich auch um eine unabhängige Erfindung handeln, welche folgendermaßen beschrieben werden könnte:
Es kann sich dabei um eine Palettier- und Depalettierstation für und Verfahren zum Depalettieren von Umverpackungen handeln, mit einem Manipulator mit einem Erfassungsbereich sowie wenigstens einer in den Erfassungsbereich abschnittsweise hineinreichende Horizontalfördereinrichtung, wobei der mindestens eine Manipulator zur Abnahme von Umverpackungen von einer Palette, sowie zur Positionierung der von der Palette abgenommenen Umverpackungen auf einem in den Erfassungsbereich hineinreichenden Abschnitt der wenigstens einen Horizontalfördereinrichtung ausgebildet ist. Diese Palettier- und Depalettierstation für und das Verfahren zum Depalettieren von Umverpackungen können insbesondere dadurch gekennzeichnet sein, dass der Manipulator Umverpackungen zeitweise palettiert und zeitweise depalettiert.

Der Erfassungsbereich entspricht dem Bereich, in welchem der Manipulator Dinge, Objekte und/oder Stückgüter manipulieren kann. Insbesondere ist der Manipulator stationär angeordnet. Insbesondere ist der Manipulator ein Roboter, insbesondere einer, der sein Werkzeug um eine oder mehrere Achsen schwenken und linear bewegen kann. Alternativ kann es sich beispielsweise auch um einen Knickarmroboter oder einen Tripod (d.h. einen Parallelkinematik-Roboter o. dgl.) handeln. Insbesondere findet ein Palettieren von Umverpackungen gleichzeitig oder kurz nach einer Rückförderung von Umverpackungen statt.

Bei den Umverpackungen könnte es sich alternativ auch um Folienrollen zur Herstellung von Schrumpffolien- oder Stretchfoliengebinden handeln. D.h. es muss sich bei den Umverpackungen nicht zwingend um die erwähnten Zuschnitte handeln.

Das Verfahren kann auf den bereits gezeigten Vorrichtungen durchgeführt werden.

Ein Formatwechsel bedingt nicht zwingend einen Wechsel des zu verpackenden Guts (vorzugsweise Getränkebehälter); es kann auch lediglich die Anzahl der zu verpackenden Güter variiert werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsform einer erfindungsgemäßen Depalettierstation und einer Ausführungsform eines erfindungsgemäßen Verpackungssystems.
Fig. 2 zeigt eine schematische Ansicht einer weiteren Ausführungsform einer erfindungsgemäßen Depalettierstation und einer Ausführungsform eines erfindungsgemäßen Verpackungssystems.
Figuren 3 und 4 zeigen einzelne Aspekte, wie sie in diversen Ausführungsformen einer erfindungsgemäßen Depalettierstation sowie in diversen Ausführungsformen eines erfindungsgemäßen Verpackungssystems vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

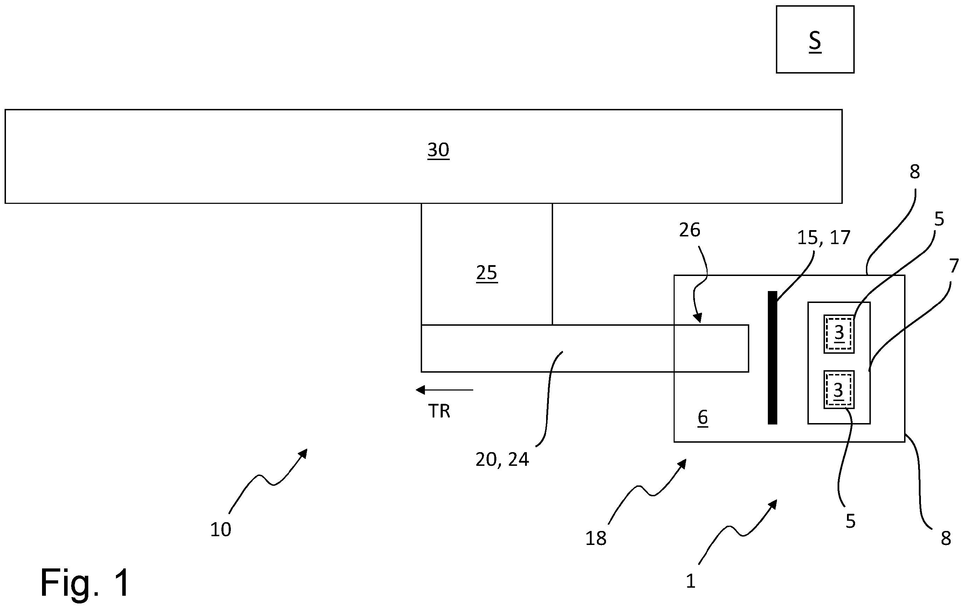

Die Fig. 1 zeigt eine schematische Ansicht einer Ausführungsform einer erfindungsgemäßen Depalettierstation 1 und einer Ausführungsform eines erfindungsgemäßen Verpackungssystems 10. Die Depalettierstation 1 ist Bestandteil des Verpackungssystems 10 und umfasst einen physisch abgegrenzten Gefahrenbereich 6, innerhalb dessen ein Manipulator 15 angeordnet ist, bei dem es sich um ein Portalystem 17 handelt. Die physische Abgrenzung des Gefahrenbereichs 6 wird vorliegend durch mehrere Wände 8 der Depalettierstation 1 gebildet, welche gemeinsam einen Sicherheitsraum 18 bilden, innerhalb dessen sich der Gefahrenbereich 6 befindet.

Um eine Verletzung einer Person bei einem Betrieb der Depalettierstation 1 ausschließen zu können, werden Gefahrenbereiche 6 bei Depalettierstationen 1 physisch abgegrenzt, so dass ein Benutzer keine sich bewegenden Teile kontaktieren kann, wenn sich die Depalettierstation 1 in Betrieb befindet. Der Sicherheitsraum 15 ist somit geschlossen, wenn sich die Depalettierstation 1 in Betrieb befindet und kann nur unter definierten Bedingungen betreten werden, beispielsweise wenn der Manipulator 15 außer Betrieb genommen worden ist. Um den Sicherheitsraum 15 betreten zu können, verfügt der Sicherheitsraum 15 über eine Sicherheitstüre, die von einer der Wände 8 ausgebildet wird und vorliegend nicht mit dargestellt wurde.

Im Gefahrenbereich 6 befindet sich ein Abnahmebereich 7, in welchem vorliegend genau zwei Paletten 5 positioniert sind, auf denen jeweils ein Stapel an Umverpackungen 3 angeordnet ist. Ein Arbeitsbereich des Manipulators 15 erstreckt sich über den gesamten Abnahmebereich 7, so dass der Manipulator 15 auf die beiden im Abnahmebereich 7 positionierten Stapel an Umverpackungen 3 zugreifen kann, welche sich auf den beiden im Abnahmebereich 7 positionierten Paletten 5 befinden. Der Manipulator 15 nimmt somit Umverpackungen von einer jeweiligen Palette 5 ab und positioniert diese Umverpackungen sodann auf einem in den Gefahrenbereich 6 bzw. in den Sicherheitsraum 18 hineinreichenden Abschnitt 26 einer Horizontalfördereinrichtung 20, bei der es sich vorliegend um einen Rollenförderer 24 handelt.

Um einen gesamten Stapel an Umverpackungen 3 von einer jeweiligen Palette 5 abzunehmen, nimmt der Manipulator 15 schrittweise einen jeweiligen Anteil an Umverpackungen vom jeweiligen Stapel an Umverpackungen 3 ab und verbringt die abgenommenen Umverpackungen dann jeweils zu dem in den Sicherheitsraum 18 hineinreichenden Abschnitt 26 der Horizontalfördereinrichtung 20, bis sämtliche Umverpackungen von einer jeweiligen Palette 5 abgenommen sind.

Eine Transportrichtung der Horizontalfördereinrichtung 20 bzw. des Rollenförderers 24 ist in Fig. 1 auf Verweis mit TR angedeutet. Von der Horizontalfördereinrichtung 20 gelangen die Umverpackungen zu einer Vereinzelungsstation 25, welche noch übereinanderliegende Umverpackungen voneinander trennt und einzeln an die Verpackungsvorrichtung 30 übergibt. Die Verpackungsvorrichtung 30 umfasst eine Transportstrecke für Artikel. Zudem umfasst die Verpackungsvorrichtung 30 eine Zuführung für Umverpackungen. Diese Zuführung ist derart ausgebildet, dass Umverpackungen von unterhalb einer zur Bewegung der Artikel vorgesehenen Transportebene in den Transportweg der Artikel eingebracht werden, wobei jeweils mehrere Artikel auf eine in ihren Transportweg eingebrachte Umverpackung auffahren und hierauf folgend auf der jeweiligen Umverpackung aufstehen.

Bei der Umverpackung kann es sich beispielsweise um ein Tray handeln, das mehrere Laschen besitzt, die im Verlauf einer weiteren Bewegung der Artikel in Richtung nach oben gefaltet werden.

Die Vereinzelungsstation 25 kann alternativ auch unterhalb der Verpackungsvorrichtung angeordnet sein.

Um Artikel über die Verpackungsvorrichtung 30 nach Möglichkeit ohne Unterbrechung verpacken zu können, ist es notwendig, dass der Verpackungsvorrichtung 30 jederzeit eine ausreichende Anzahl an Umverpackungen bereitgestellt wird. Diese Funktion kann die Depalettierstation 1 erfüllen.

Um der Verpackungsvorrichtung jederzeit ausreichend Umverpackungen bereitstellen zu können, umfasst die Depalettierstation 1 einen Manipulator 15, der mit einer Steuereinrichtung S in Verbindung steht. Die Steuereinrichtung S kann den Manipulator 15 zur Abnahme von Umverpackungen von einer Palette 5 ansteuern kann.

Wenn die Depalettierstation 1 in Betrieb genommen wird, wird der Manipulator 15 über die Steuereinrichtung S derart betätigt, dass der Manipulator 15 zunächst Umverpackungen von einer der beiden Paletten 5 abnimmt, bis sich auf dieser Palette 5 keine Umverpackungen mehr befinden bzw. bis der gesamte Stapel an Umverpackungen 3 von dieser Palette 5 abgenommen worden ist. Unmittelbar hierauf folgend wird der Manipulator 15 über die Steuereinrichtung S derart betätigt, dass der Manipulator 15 von der weiteren Palette 5, auf welcher sich noch ein Stapel an Umverpackungen 3 befindet, Umverpackungen abnimmt und an den Abschnitt 26 der Horizontalfördereinrichtung 20 übergibt, welcher Abschnitt 26 in den Gefahrenbereich 16 hineinreicht.

In Abhängigkeit der jeweiligen Sicherheitsvorkehrungen für den Sicherheitsraum 18 kann eine leere Palette 5 entweder sehr schnell ausgetauscht werden, wozu der Manipulator 15 nur kurzzeitig außer Betrieb genommen wird oder sogar während eines Betriebes des Manipulators 15 ausgetauscht werden, wenn der Austausch einer leeren Palette 5 gegen eine neue Palette 5 mit einem Stapel an Umverpackungen 3 automatisiert erfolgt.

Für den Manipulator 15 wird es durch die bei der Depalettierstation 1 mögliche Positionierung von zwei Paletten 5 mit einem jeweiligen Stapel 3 an Umverpackungen 3 im Gefahrenbereich 16 möglich, unterbrechungsfrei oder zumindest näherungsweise unterbrechungsfrei Umverpackungen von einer Palette 5 abzunehmen und auf dem Abschnitt 26 der Horizontalfördereinrichtung 20 abzusehen, welche die Umverpackungen sodann weiter in Richtung der Vereinzelungsstation 25 und der Verpackungsvorrichtung 30 bewegt.

Die Verpackungsvorrichtung 30 kann hierdurch kontinuierlich mit einer entsprechenden Anzahl an Umverpackungen versorgt werden, welche sie für einen unterbrechungsfreien Verpackungsprozess von Artikeln benötigt. Pufferstrecken mit umfangreichen Dimensionierungen sind daher für eine ausreichende Versorgung der Verpackungsvorrichtung 1 mit Umverpackungen nicht notwendig.

Wie es die schematische Darstellung der Fig. 1 erkennen lässt, besitzt der über Wände 8 physisch abgegrenzte Gefahrenbereich 6 eine entsprechende Dimensionierung, bei welcher im Gefahrenbereich 6 vorliegend zwei Paletten 5 mit einem jeweiligen hierauf angeordneten Stapel 5 an Umverpackungen 3 angeordnet werden können. In weiteren Ausführungsformen kann der über Wände 8 physisch abgegrenzte Gefahrenbereich 6 auch eine entsprechende Dimensionierung besitzen, bei welcher im Gefahrenbereich 6 bzw. im Abnahmebereich 7 mehr als zwei Paletten 5 angeordnet werden können.

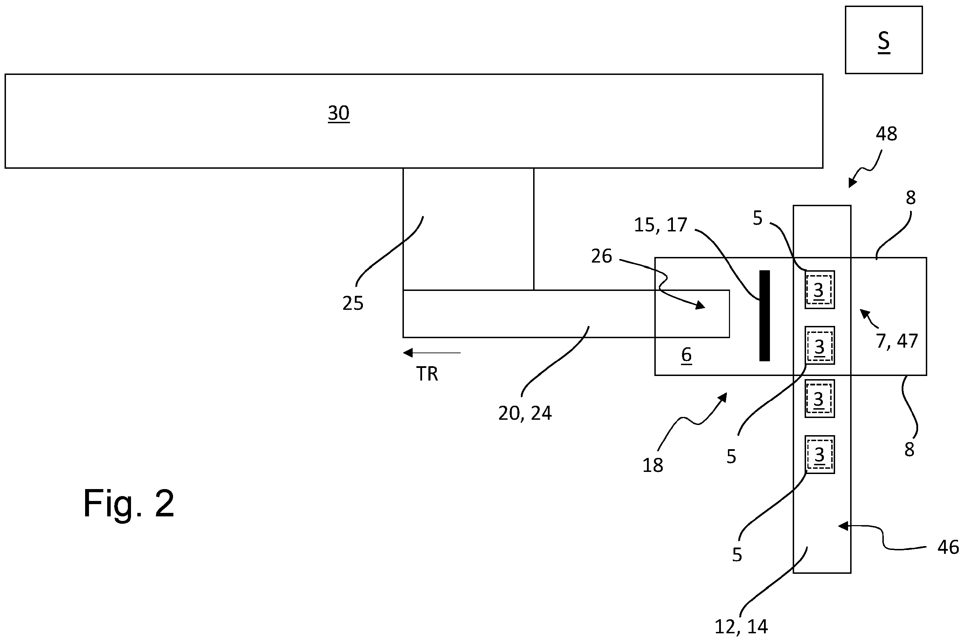

Die Fig. 2 zeigt eine schematische Ansicht einer weiteren Ausführungsform einer erfindungsgemäßen Depalettierstation 1 und einer Ausführungsform eines erfindungsgemäßen Verpackungssystems 10. Die Depalettierstation 1 ist auch bei dem Ausführungsbeispiel nach Fig. 2 als Bestandteil des Verpackungssystems 10 ausgebildet. Entsprechend dem vorherig zu Fig. 1 beschriebenen Ausführungsbeispiel umfasst auch die Depalettierstation 1 des Ausführungsbeispiels nach Fig. 2 einen Manipulator 15, der als Portalsystems 17 ausgebildet ist.

Zudem ragt die Horizontalfördereinrichtung 20 weiterhin über den Abschnitt 26 in den Gefahrenbereich 6 hinein, wobei der Manipulator 15 Umverpackungen auf dem Abschnitt 26 der Horizontalfördereinrichtung 20 positioniert und die Horizontalfördereinrichtung 20 die Umverpackungen sodann weiter in Richtung der Vereinzelungsstation 25 bewegt. Der Aufnahmebereich 7, innerhalb dessen der Manipulator 15 Umverpackungen von einer jeweiligen Palette 5 abnimmt, wird in Fig. 2 durch eine weitere Horizontalfördereinrichtung 12 der Depalettierstation 1 ausgebildet. Auch bei der weiteren Horizontalfördereinrichtung 12 handelt es sich vorliegend um einen Rollenförderer 14.

Wie es Fig. 2 erkennen lässt, erstreckt sich die weitere Horizontalfördereinrichtung 12 durch den Gefahrenbereich 6 und umfasst einen ersten Abschnitt 46, einen zweiten Abschnitt 47 sowie einen dritten Abschnitt 48. Der zweite Abschnitt 47 befindet sich zwischen dem ersten Abschnitt 46 und dem dritten Abschnitt 48. Zudem befindet sich der zweite Abschnitt 47 im Gefahrenbereich 6, wohingegen der erste Abschnitt 46 und der dritte Abschnitt 48 außerhalb des Gefahrenbereichs 6 positioniert sind.

Der Manipulator 15 kann weiterhin aus dem Aufnahmebereich 7, der im Ausführungsbeispiel nach Fig. 2 durch den zweiten Abschnitt 47 der weiteren Horizontalfördereinrichtung 12 ausgebildet ist, Umverpackungen aufnehmen. Ein jeweiliger Stapel an Umverpackungen 3 ist hierbei von einer jeweiligen Palette 5 aufgenommen, die sich im Aufnahmebereich 7 befindet. Vorliegend hat der Aufnahmebereich 7 bzw. der zweite Abschnitt 47 der weiteren Horizontalfördereinrichtung 12 eine solche Dimensionierung, dass gemeinsam zwei Paletten 5 im Aufnahmebereich 7 angeordnet werden können.

Der Manipulator 15 nimmt Umverpackungen von einer der beiden Paletten 5 ab, bis der Vorrat an Umverpackungen dieser Palette 5 erschöpft ist. Hierauf folgend wechselt der Manipulator 15 auf die weitere Palette 5, auf welcher sich noch ein Stapel an Umverpackungen 3 befindet und nimmt von dieser weiteren Palette 5 Umverpackungen ab. Sodann wird die weitere Horizontalfördereinrichtung 12 kurzzeitig angetrieben, wodurch die beiden leeren Paletten 5 den Gefahrenbereich 6 verlassen und zwei weitere Paletten 5 mit einem jeweiligen neuen hierauf angeordneten Stapel an Umverpackungen 3 in den Gefahrenbereich 6 eintreten. Der Gefahrenbereich 6 muss somit nicht betreten werden, um dem Manipulator 15 stets Paletten 5 mit einem jeweiligen hierauf angeordneten Stapel an Umverpackungen 3 bereitstellen zu können.

Indem der Manipulator 15 zunächst zwei Paletten 5 vollständig leeren kann, bis der Manipulator 15 neue Paletten mit einem jeweiligen neuen Stapel an Umverpackungen 3 benötigt, kann der Manipulator 15 bzw. die Depalettierstation 1 sehr lange Umverpackungen bereitstellen, bis eine kurzzeitige Unterbrechung notwendig ist. Die Unterbrechung erfordert lediglich eine geringe Zeit, da im ersten Abschnitt 46 der weiteren Horizontalfördereinrichtung 12 bereits neue Paletten 5 mit einem jeweiligen Stapel an Umverpackungen 3 bereitstehen, welche durch kurzzeitigen Antrieb der weiteren Horizontalfördereinrichtung 12 in den Gefahrenbereich 6 bewegt werden.

Die Verpackungsvorrichtung 30 kann auch bei der Ausführungsform nach Fig. 2 durchgehend mit einer entsprechenden Anzahl an Umverpackungen versorgt werden, welche die Verpackungsvorrichtung 30 zum kontinuierlichen Betrieb benötigt. Pufferstrecken mit großer Dimensionierung sind auch bei der Ausführungsform nach Fig. 2 nicht notwendig, um einen unterbrechungsfreien Betrieb der Verpackungsvorrichtung 30 gewährleisten zu können.

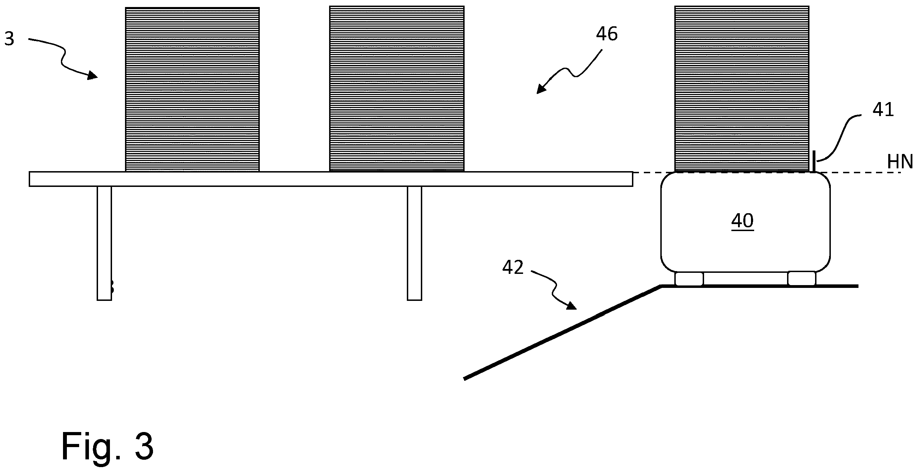

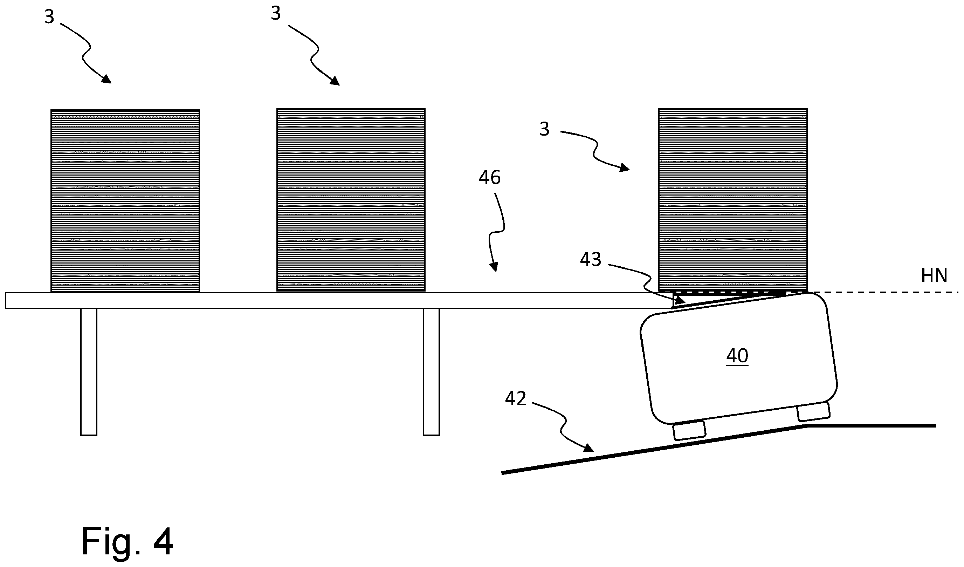

Die Versorgung des ersten Abschnittes 46 der weiteren Horizontalfördereinrichtung 12 mit neuen Paletten 5 und einem jeweiligen hierauf angeordneten Stapel an Umverpackungen 3 kann beispielsweise erfolgen, indem ein Benutzer die jeweilige neue Palette 5 mit dem jeweiligen hierauf angeordneten Stapel an Umverpackungen 3 auf dem ersten Abschnitt 46 der weiteren Horizontalfördereinrichtung 12 positioniert. Wie es nachfolgend zu den Figuren 3 und 4 beschrieben ist, besteht darüber hinaus die Möglichkeit, den ersten Abschnitt 46 einer weiteren Horizontalfördereinrichtung 12 entsprechend Fig. 2 über ein fahrerloses Transportfahrzeug 40 mit einer neuen Palette 5 und einem hierauf angeordneten Stapel an Umverpackungen 3 zu versorgen.

Bei der Horizontalfördereinrichtung 20 kann es sich, wie schon weiter oben erwähnt, zumindest in ihrem Endabschnitt 26 in vorteilhafter Ausgestaltung um einen Rollenförderer handeln, von dem der Manipulator 15 Umverpackungen abgreifen kann. Er kann diese abgegriffenen Umverpackungen einer Palette 5 zuführen und dort insbesondere stapeln bzw. zur Palette 5 rückstapeln. Bei dieser hier nicht näher ausgeführten und zeichnerisch nicht dargestellten Ausführungsvariante kann dann auf einen zusätzlichen Maschinenschutz bzw. auf Wände 8 verzichtet werden. Bei dem Manipulator 15 könnte es sich in diesem Fall z.B. um einen sog. Cobot handeln, d.h. um einen in seinen Bewegungen manuell unterstützten bzw. zumindest teilweise manuell geführten Roboter, der zudem in seinen Manipulationsbewegungen durch menschliche Unterstützung angelernt werden kann.

Die Figuren 3 und 4 zeigen darüber hinaus einzelne Aspekte, wie sie in diversen Ausführungsformen einer erfindungsgemäßen Depalettierstation 1 sowie in diversen Ausführungsformen eines erfindungsgemäßen Verpackungssystems 10 vorgesehen sein können.

Eine Depalettierstation 1 sowie ein Verpackungssystem 10 können ein fahrerloses Transportfahrzeug 40 bzw. ein FTS besitzen, bei dem es sich um ein flurgebundenes Fördermittel mit eigenem Fahrantrieb handelt, das automatisch gesteuert und berührungslos geführt wird. Beispielsweise kann eine induktive Leitlinie vorgesehen sein, entlang welcher sich das fahrerlose Transportfahrzeug 40 bewegt.

Das in Fig. 3 gezeigte fahrerlose Transportfahrzeug 40 holt eine Palette 5 mit einem hierauf angeordneten Stapel an Umverpackungen 3 von einem Lager ab und bewegt sich dann zusammen mit der Palette 5 und dem hierauf angeordneten Stapel an Umverpackungen 3 in Richtung des ersten Abschnittes 46 der weiteren Horizontalfördereinrichtung 12. Die Palette 5 wurde aus Gründen der Übersichtlichkeit in den Figuren 3 und 4 jeweils nicht mit dargestellt. Im Bereich des ersten Abschnittes 46 der weiteren Horizontalfördereinrichtung 12 (vgl. Fig. 2) ist eine Rampe 42 angeordnet. Das fahrerlose Transportfahrzeug 40 fährt auf die Rampe 42 und erreicht hierdurch ein Höhenniveau HN, welches sich zur Übergabe der Palette 5 mit dem hierauf angeordneten Stapel an Umverpackungen 3 an den ersten Abschnitt 46 der weiteren Horizontalfördereinrichtung 12 eignet.

Bestandteil des fahrerlosen Transportfahrzeuges 40 ist ein Anschlag 41. Nachdem das fahrerlose Transportfahrzeug 40 mittels der Rampe 42 das Höhenniveau HN erreicht hat, wird der Anschlag 41 in horizontaler Richtung bewegt und schiebt hierdurch die Palette 5 zusammen mit dem Stapel an Umverpackungen 3 auf den ersten Abschnitt 46 der weiteren Horizontalfördereinrichtung 12. Wenn die Palette 5 zusammen mit dem Stapel an Umverpackungen 3 vom fahrerlosen Transportfahrzeug 40 an den ersten Abschnitt 46 übergeben worden ist, fährt das fahrerlose Transportfahrzeug 40 zum Lager und holt von dort eine neue Palette 5 mit einem weiteren hierauf angeordneten Stapel an Umverpackungen 3 ab.

Die Fig. 4 zeigt weitere einzelne Aspekte, wie sie in diversen Ausführungsformen einer erfindungsgemäßen Depalettierstation 1 sowie in diversen Ausführungsformen eines erfindungsgemäßen Verpackungssystems 10 vorgesehen sein können. Auch in Fig. 4 ist ein fahrerloses Transportfahrzeug 40 zu erkennen, das einen Stapel an Umverpackungen 3 trägt und zur Übergabe des Stapels an Umverpackungen 3 auf eine Rampe 42 fährt. Gemäß der vorherigen Beschreibung zu Fig. 3 erreicht das fahrerlose Transportfahrzeug 40 hierdurch ein Höhenniveau HN, welches sich zur Übergabe der Palette 5 mit dem hierauf angeordneten Stapel an Umverpackungen 3 an den ersten Abschnitt 46 der weiteren Horizontalfördereinrichtung 12 eignet.

Das fahrerlose Transportfahrzeug 40 aus Fig. 4 umfasst eine Klappe 43, auf welcher die Palette 5 und der hierauf angeordnete Stapel an Umverpackungen 3 positioniert sind. Zur Übergabe der Palette 5 und des hierauf angeordneten Stapels an Umverpackungen 3 an den ersten Abschnitt 46 der weiteren Horizontalfördereinrichtung 12 fährt das fahrerlose Transportfahrzeug 40 abwärts der Rampe 42. Zeitgleich führt die Klappe 43 eine Schwenkbewegung aus. Hierdurch verbleibt die Palette 5 zusammen mit dem hierauf angeordneten Stapel an Umverpackungen 3 auf ihrem bisherigen Höhenniveau HN, bis die Palette 5 zusammen mit dem hierauf angeordneten Stapel an Umverpackungen 3 vollständig oder zumindest näherungsweise vollständig an den ersten Abschnitt 46 der weiteren Horizontalfördereinrichtung 12 übergeben worden ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Depalettierstation
- 3: Stapel an Umverpackungen
- 5: Palette
- 6: Gefahrenbereich
- 7: Abnahmebereich
- 8: Wand
- 10: Verpackungssystem, Verpackungsvorrichtung
- 12: weitere Horizontalfördereinrichtung
- 14: Rollenförderer
- 15: Manipulator
- 17: Portalsystem
- 18: Sicherheitsraum
- 20: Horizontalfördereinrichtung
- 24: Rollenförderer
- 25: Vereinzelungsstation
- 26: Abschnitt der Horizontalfördereinrichtung 20
- 30: Verpackungsvorrichtung
- 40: Fahrerloses Transportfahrzeug, FTS
- 41: Anschlag
- 42: Rampe
- 43: Klappe
- 46: erster Abschnitt
- 47: zweiter Abschnitt
- 48: dritter Abschnitt

- HN: Höhenniveau
- S: Steuereinrichtung
- TR: Transportrichtung

## Patentansprüche

1. Depalettierstation (1) für Umverpackungen, welche einen physisch abgegrenzten Gefahrenbereich (6) ausbildet und mindestens einen im physisch abgegrenzten Gefahrenbereich angeordneten Manipulator (15) sowie wenigstens eine in den physisch abgegrenzten Gefahrenbereich (6) abschnittsweise hineinreichende Horizontalfördereinrichtung (20) umfasst, wobei der mindestens eine Manipulator (15) zur Abnahme von Umverpackungen von einer Palette (5), sowie zur Positionierung der von der Palette (5) abgenommenen Umverpackungen auf einem in den Gefahrenbereich (6) hineinreichenden Abschnitt (26) der wenigstens einen Horizontalfördereinrichtung (20) ausgebildet ist, **dadurch gekennzeichnet, dass** der Gefahrenbereich (6) derart physisch abgegrenzt ist, dass im Gefahrenbereich (6) mindestens zwei Paletten (5) mit hierauf gestapelt angeordneten Umverpackungen gemeinsam positionierbar sind.

2. Depalettierstation (1) nach Anspruch 1, bei welcher der mindestens eine Manipulator (15) derart konfiguriert und ausgestattet ist, dass mittels des mindestens einen Manipulators (15) sämtliche Umverpackungen von einer der mindestens zwei im Gefahrenbereich (6) positionierten Paletten (5) abnehmbar sind und mittels des mindestens einen Manipulators (15) ohne Unterbrechung hierauf folgend sämtliche Umverpackungen von einer weiteren Palette (5) der mindestens zwei im Gefahrenbereich (6) positionierten Paletten (5) abnehmbar sind.

3. Depalettierstation (1) nach Anspruch 1 oder Anspruch 2, wobei es sich bei dem mindestens einen Manipulator (15) um mindestens ein Portalsystem (17) handelt, das mindestens einen zum Erfassen jeweils mehrerer Umverpackungen ausgebildeten Greiferkopf besitzt, welcher zwischen den mindestens zwei im Gefahrenbereich (6) positionierten Paletten (5) hin und her beweglich ausgebildet ist.

4. Depalettierstation (1) nach einem der Ansprüche 1 bis 3, umfassend mindestens eine weitere Horizontalfördereinrichtung (12), die sich durch den Gefahrenbereich (6) erstreckt und einen ersten Abschnitt (46), einen zweiten Abschnitt (47) und einen dritten Abschnitt (48) ausbildet, wobei der zweite Abschnitt (47) in einer Transportrichtung der mindestens einen weiteren Horizontalfördereinrichtung (12) an den ersten Abschnitt (46) anschließt und wobei der dritte Abschnitt (48) in Transportrichtung der mindestens einen weiteren Horizontalfördereinrichtung (12) an den zweiten Abschnitt (47) anschließt und wobei
- der erste Abschnitt (46) sich außerhalb des physisch abgegrenzten Gefahrenbereichs (6) befindet und eine Aufnahmekapazität für mindestens eine Palette (5) mit hierauf gestapelt angeordneten Umverpackungen besitzt und wobei
- der zweite Abschnitt (47) sich im Gefahrenbereich (6) befindet und eine Aufnahmekapazität für mindestens zwei Paletten (5) mit hierauf gestapelt angeordneten Umverpackungen besitzt und wobei
- der dritte Abschnitt (48) sich außerhalb des Gefahrenbereichs (6) befindet und zum Abführen einer leeren Palette (5) aus dem Gefahrenbereich (6) ausgebildet ist, von welcher leeren Palette (5) mittels des mindestens einen Manipulators (15) sämtliche Umverpackungen abgenommen worden sind.

5. Depalettierstation (1) nach Anspruch 4, bei welcher die wenigstens eine weitere Horizontalfördereinrichtung (12) im Bereich des ersten Abschnittes (46), im Bereich des zweiten Abschnittes (47) und/oder im Bereich des dritten Abschnittes (48) als Rollenförderer (14) ausgebildet ist.

6. Depalettierstation (1) nach Anspruch 4 oder Anspruch 5, bei welcher die mindestens eine weitere Horizontalfördereinrichtung (12) zum Drehen einer Palette (5) um eine vertikal orientierte Achse mit einem Drehwinkel ausgebildet ist, welcher 90° oder ein Mehrfaches von 90° beträgt.

7. Depalettierstation (1) nach einem der Ansprüche 4 bis 6, umfassend mindestens ein fahrerloses Transportfahrzeug (40), welches zum Verbringen einer Palette (5) mit hierauf gestapelt angeordneten Umverpackungen an den ersten Abschnitt (46) der mindestens einen weiteren Horizontalfördereinrichtung (12) ausgebildet ist.

8. Depalettierstation (1) nach Anspruch 7 mit mindestens einer Rampe (42), welche das mindestens eine fahrerloses Transportfahrzeug (40) zur Übergabe einer Palette (5) mit hierauf gestapelt angeordneten Umverpackungen an den ersten Abschnitt (46) der mindestens einen weiteren Horizontalfördereinrichtung (12) anfahren kann.

9. Depalettierstation (1) nach einem der Ansprüche 1 bis 8 mit mindestens einem fahrerlosen Transportfahrzeug (40) zum Transport einer Palette (5) mit hierauf gestapelt angeordneten Umverpackungen, wobei der physisch abgegrenzte Gefahrenbereich (6) über einen Zugang verfügt und mindestens eine Steuereinrichtung (S) sowie wenigstens eine Sensorik vorgesehen sind, über welche wenigstens eine Sensorik das mindestens eine fahrerloses Transportfahrzeug (40) von der Steuereinrichtung (S) identifizierbar ist, wobei die Steuereinrichtung (S) zum Öffnen des Zugangs für das mindestens eine fahrerlose Transportfahrzeug (40) als Reaktion auf eine Identifizierung des mindestens einen fahrerlosen Transportfahrzeuges (40) über die wenigstens eine Sensorik ausgebildet ist.

10. Verpackungssystem (10), umfassend
- mindestens eine Depalettierstation (1) gemäß einem der Ansprüche 1 bis 9 sowie
- mindestens eine Verpackungsvorrichtung (30) zum Verpacken jeweils mehrerer Artikel mit einer jeweiligen Umverpackung, wobei der Verpackungsvorrichtung (10) Umverpackungen bereitstellbar sind.

11. Verpackungssystem (10) nach Anspruch 10, bei welchem der Verpackungsvorrichtung (10) jeweils Umverpackungen über die wenigstens eine Horizontalfördereinrichtung (20) der Depalettierstation (1) bereitstellbar sind.
